(19) **Europäisches Patentamt**

**European Patent Office**

**Office européen des brevets**

(11) **EP 0 568 862 B1**

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(51) Int. Cl.$^6$: **B22F 1/00**, B22F 9/30, B22F 9/28

(21) Anmeldenummer: **93106465.3**

(22) Anmeldetag: **21.04.1993**

(54) **Feinteiliges Metallpulver**

Fine metal particles

Poudre métallique finement divisée

(84) Benannte Vertragsstaaten:
**AT DE LU SE**

(30) Priorität: **04.05.1992 DE 4214723**

(43) Veröffentlichungstag der Anmeldung:
**10.11.1993 Patentblatt 1993/45**

(73) Patentinhaber: **H.C. Starck GmbH & Co. KG**
**D-38642 Goslar (DE)**

(72) Erfinder:
• **König, Theo, Dr.**
**W-7887 Laufenburg-Rotzel (DE)**
• **Fister, Dietmar, Dr.**
**W-7886 Murg-Niederhof (DE)**

(74) Vertreter: **Steiling, Lothar, Dr. et al**
**Bayer AG**
**Konzernzentrale RP**
**Patente Konzern**
**51368 Leverkusen (DE)**

(56) Entgegenhaltungen:
GB-A- 919 954    GB-A- 950 148
US-A- 4 383 852

• JOURNAL OF THE ELECTROCHEMICAL SOCIETY Bd. 109, Nr. 8, August 1962, MANCHESTER, NEW HAMPSHIRE US Seiten 713 - 716 H.LAMPREY ET AL 'ultrafine tungsten and molybdenum powders'
• PATENT ABSTRACTS OF JAPAN vol. 12, no. 219 (C-506)22. Juni 1988 & JP-A-63 016 041 (KAWASAKI STEEL CORP) 23. Januar 1988

## Beschreibung

Die vorliegende Erfindung betrifft feinteilige Pulver der Metalle Fe, Co, Ni, W und/oder Mo mit einer definierten Partikelgröße zwischen 1,0 nm und kleiner 100 nm.

Für die mechanischen Eigenschaften von pulvermetallurgisch hergestellten Bauteilen sind die Eigenschaften der Ausgangspulver von entscheidender Bedeutung. Insbesondere eine enge Teilchengrößenverteilung, hohe Pulverreinheit und fehlende Grobkornanteile bzw. Agglomerate wirken sich positiv auf die Eigenschaften entsprechender Bauteile aus.

Zur technischen Herstellung von feinen Metallpulvern sind zahlreiche Verfahren bekannt geworden.

Neben den rein mechanischen Zerkleinerungs- und Klassierverfahren, die den Nachteil haben, daß nur Pulver bis zu einer bestimmten Feinheit und mit relativ breiter Kornverteilung herstellbar sind, wurden auch eine Vielzahl von Verfahren zur Abscheidung aus der Gasphase vorgeschlagen.

Durch zum Teil sehr kleine Energiequellen, wie z.B. thermisches Plasma oder Laserstrahl, oder bei turbulenten Flammen, wie z.B. einem Chlorknallgasbrenner, ist die Kornverteilung und Korngröße der hergestellten Pulver nicht exakt steuerbar, und üblicherweise führen die Reaktionsbedingungen zu einer breiten Kornverteilung sowie zum Auftreten von Einzelteilchen, deren Durchmesser ein Vielfaches der Durchschnittskorngröße beträgt.

Nach dem derzeit bekannt gewordenen großtechnischen Pulverherstellungsverfahren ist es kaum oder nur sehr schwer möglich, Pulver mit Durchschnittskorngrößen von < 0,5 $\mu$m, gemessen nach FSSS (und nicht Einzelteilchengröße), herzustellen. Bei diesen konventionell hergestellten feinen Pulvern läßt es sich praktisch nicht ausschließen, daß ein gewisser Prozentsatz an Grobkorn im Material enthalten ist, der sich schädlich auf die mechanischen Eigenschaften daraus hergestellter Bauteile auswirkt. Auch erhält man bei herkömmlichen Mahlverfahren eine sehr breite Kornverteilung, die bei diesen Pulvern auch nicht durch Sichtschritte wesentlich eingeengt werden kann.

Andere Gasphasenverfahren arbeiten nicht mit einem strömungstechnisch optimierten Heißwandreaktor, sondern verwenden zur Umsetzung eine Plasmaflamme oder andere Energieträger wie Laserstrahlen. Nachteile dieser Verfahren sind im wesentlichen die in der Praxis nicht kontrollierbaren Reaktionsbedingungen in verschiedenen Bereichen der Reaktionszone mit sehr großen Temperaturgradienten und/oder turbulenten Strömungen. Dadurch entstehen Pulver mit breiter Kornverteilung.

Es sind zahlreiche Vorschläge für Verfahren zur Herstellung von feinsten Metallpulvern gemacht worden, die aber alle mit Nachteilen behaftet sind.

In der EP-A 0 290 177 wird die Zersetzung von Übergangsmetallcarbonylen zur Herstellung feiner metallischer Pulver beschrieben. Hierbei können bis zu 200 nm feine Pulver erhalten werden.

Auf der Suche nach Metallen mit neuen mechanischen, elektrischen und magnetischen Eigenschaften werden immer feinere Metallpulver verlangt.

Nach dem Edelgaskondensationsverfahren ist die Herstellung feinster Metallpulver im unteren Nanometer-Bereich möglich. Hierbei können allerdings nur Mengen im Milligramm-Maßstab erhalten werden. Außerdem weisen die so hergestellten Pulver keine enge Korngrößenverteilung auf.

Aufgabe dieser Erfindung ist somit die Bereitstellung von feinteiligen Metallpulvern, welche die beschriebenen Nachteile der Pulver des Standes der Technik nicht aufweisen.

Es wurden nun Metallpulver gefunden, welche diese Forderungen erfüllen Diese Pulver sind Gegenstand dieser Erfindung.

Gegenstand der Erfindung sind feinteilige Pulver der Metalle Fe, Co, Ni, Mo und/oder W mit einer definierten Partikelgröße zwischen 1,0 nm und kleiner 100 nm, wobei weniger als 1 % der Einzelpartikel eine Abweichung von mehr als 40 % und keine Einzelpartikel eine Abweichung von mehr als 60 % von der mittleren Korngröße aufweisen.

Bevorzugt weisen weniger als 1 % der Einzelpartikel eine Abweichung von mehr als 20 % und keine Einzelpartikel eine Abweichung von mehr als 50 % von der mittleren Korngröße auf. Besonders bevorzugt weisen weniger als 1 % der Einzelpartikel eine Abweichung von mehr als 10 % und keine Einzelpartikel eine Abweichung von mehr als 40 % von der mittleren Korngröße auf. Die erfindungsgemäßen Metallpulver haben bevorzugt Partikelgrößen von 1 bis kleiner 50 nm, besonders bevorzugt von 1 bis kleiner 10 nm und ganz besonders bevorzugt von 1 bis kleiner 5 nm.

Die erfindungsgemäßen Metallpulver zeichnen sich durch ihre hohe Reinheit aus. So weisen sie bevorzugt einen Sauerstoffgehalt von weniger als 5.000 ppm und besonders bevorzugt von weniger als 1.000 ppm auf.

Besonders reine erfindungsgemäße Metallpulver sind dadurch gekennzeichnet, daß sie einen Sauerstoffgehalt von weniger als 100 ppm, bevorzugt weniger als 50 ppm, aufweisen.

Auch die nichtoxidischen Verunreinigungen sind sehr gering. So beträgt bevorzugt die Summe ihrer Verunreinigungen, mit Ausnahme der oxidischen Verunreinigungen, kleiner als 5.000 ppm, besonders bevorzugt kleiner als 1.000 ppm.

In einer ganz besonders bevorzugten Ausführungsform beträgt die Summe ihrer Verunreinigungen, mit Ausnahme der oxidischen Verunreinigungen, kleiner als 200 ppm.

Die erfindungsgemäßen Pulver sind im technischen Maßstab erhältlich. Bevorzugt liegen sie in Mengen von mehr als 1 kg vor.

Die erfindungsgemäßen Pulver sind erhältlich in einem Verfahren zur Herstellung feinteiliger Metallpulver durch Reaktion entsprechender Metallverbindungen und entsprechender Reaktionspartner in der Gasphase -CVR-, wobei die Metallverbindung(en) und die weiteren Reaktionspartner in einem Reaktor im gasförmigen Zustand zur Reaktion gebracht, direkt aus der Gasphase homogen unter Ausschluß jeglicher Wandreaktion auskondensiert und anschließend vom Reaktionsmedium abgetrennt werden, welches dadurch gekennzeichnet ist, daß die Metallverbindungen und die Reaktionspartner getrennt voneinander mindestens mit Reaktionstemperatur in den Reaktor eingebracht werden. Für den Fall, daß mehrere Metallverbindungen und/oder Reaktionspartner eingebracht werden sollen, sind die jeweiligen Gasmischungen so zu wählen, daß während des Aufheizens keine Reaktion auftritt, die zu festen Reaktionsprodukten führt. Besonders vorteilhaft läßt sich dieses Verfahren in einem Rohrreaktor durchführen. Es ist besonders günstig, wenn die Metallverbindungen, die Reaktionspartner und die Produktpartikel den Reaktor laminar durchströmen.

Durch das getrennte Vorerhitzen der Prozeßgase auf mindestens Reaktionstemperatur läßt sich der Ort der Keimbildung eingrenzen. Die laminare Strömung im Reaktor stellt eine enge Verweilzeitverteilung der Keime bzw. der Partikel sicher. Auf diese Weise läßt sich eine sehr enge Korngrößenverteilung erreichen.

Bevorzugt sollten somit die Metallverbindungen und die Reaktionspartner als koaxiale laminare Teilströme in den Reaktor eingebracht werden.

Um jedoch die Durchmischung der beiden koaxialen Teilströme sicherzustellen, wird durch Einbau eines Störkörpers in der sonst streng laminaren Strömung eine in Intensität und Aufweitung definierte Karman'sche Wirbelstraße erzeugt.

Eine bevorzugte Ausführungsform dieses Verfahrens besteht also darin, daß die koaxialen, laminaren Teilströme der Metallverbindung(en) und der Reaktionspartner mittels einer Karman'schen Wirbelstraße in definierter Weise vermischt werden.

Um die energetisch stark bevorzugte Abscheidung der Reaktionsteilnehmer an der Reaktorwand zu verhindern, wird bevorzugt das Reaktonsmedium von der Reaktionswand durch eine Inertgasschicht abgeschirmt. Dies kann dadurch erfolgen, daß durch speziell geformte Ringspalte in der Reaktorwand ein Inertgasstrom eingebracht wird, der über den Coandaeffekt an der Reaktorwand anliegt. Die im Reaktor durch eine homogene Abscheidung aus der Gasphase bei typischen Verweilzeiten zwischen 10 und 300 msec entstandenen Metallpulverpartikel verlassen diesen gemeinsam mit den gasförmigen Reaktionsprodukten (z.B. HCl), den nicht umgesetzten Reaktanten und den Inertgasen, die als Trägergas, Spülgas und zum Zwecke der Verminderung der HCl-Adsorption eingeblasen werden. Nach dem erfindungsgemäßen Verfahren sind Ausbeuten, bezogen auf die Metallkomponente, von bis zu 100 % erzielbar.

Vorzugsweise wird dann die Abtrennung der Metallpulver bei Temperaturen oberhalb der Siede- bzw. Sublimationstemperaturen der eingesetzten Metallverbindungen, Reaktionspartner und/oder während der Reaktion gebildeten Zwangsanfallsprodukte vorgenommen. Die Abtrennung kann dabei vorteilhaft in einem Rückblasfilter vorgenommen werden. Wenn dieser bei hohen Temperaturen von z.B. 600°C betrieben wird, kann die Adsorption der Gase, insbesondere der nicht inerten Gase wie HCl an der sehr großen Oberfläche der Keramikpulver gering gehalten werden.

Die noch verbliebenen, an der Pulveroberflächen adsorbierten störenden Substanzen können in einem nachgeschalteten Vakuumbehälter weiter entfernt werden, vorzugsweise wieder bei Temperaturen von ca. 600°C. Die fertigen Pulver sollten dann unter Luftausschluß aus der Anlage ausgetragen werden.

Bevorzugte Metallverbindungen im Sinne dieser Erfindung sind eine oder mehrere aus der Gruppe Metallhalogenide, teilweise hydrierte Metallhalogenide, Metallhydride, Metallalkoholate, Metallalkyle, Metallamide, Metallazide und Metallcarbonyle.

Als weiterer Reaktionspartner wird Wasserstoff eingesetzt. Weitere Charakteristika der Pulver sind ihre hohe Reinheit, hohe Oberflächenreinheit und gute Reproduzierbarkeit.

Je nach Korngröße und Stoff können die erfindungsgemäßen Pulver sehr luftempfindlich bis pyrophor sein. Um diese Eigenschaft zu beseitigen, können diese Pulver in defenierter Weise durch Beaufschlagen mit Gas/Dampfgemischen oberflächenmodifiziert werden.

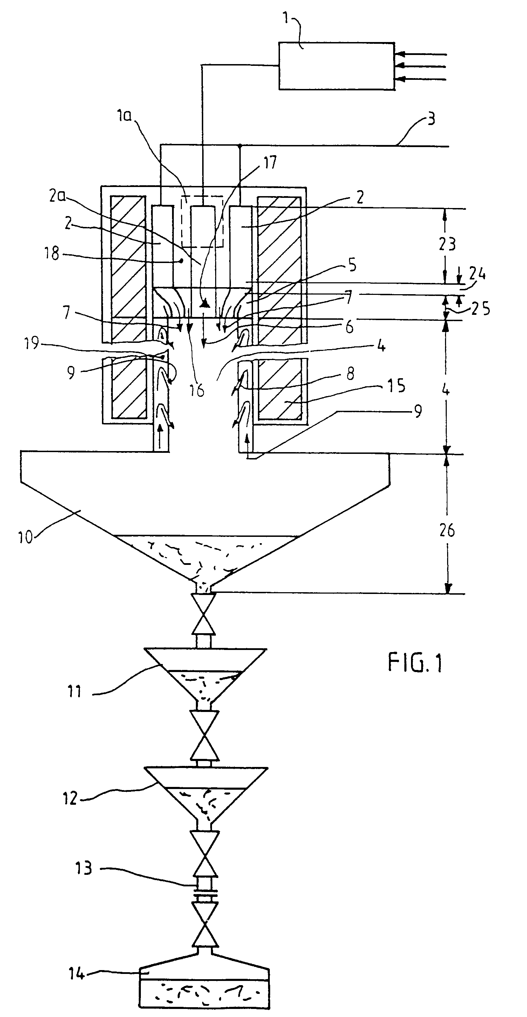

Fig. 1 ist die schematische Darstellung einer Vorrichtung, mit der die erfindungsgemäßen Pulver herstellbar sind. Anhand der Fig. 1 wird im folgenden die Durchführung dieses Verfahrens erläutert. Die dabei explizit genannten Verfahrens-, Stoff- und/oder Vorrichtungsparameter stellen dabei nur ausgewählte Möglichkeiten von vielen dar und schränken somit die Erfindung nicht ein.

Die festen, flüssigen oder gasförmigen Metallverbindungen werden in einen außerhalb angebrachten Verdampfer (1) oder einen innerhalb des Hochtemperaturofens angebrachten Verdampfer (1a) dosiert, dort bei Temperaturen von 200°C bis 2000°C verdampft und mit einem inerten Trägergas ($N_2$, Ar oder He) in den Gasvorerhitzer (2a) transportiert. Der weitere Reaktionspartner (3) $H_2$ wird ebenfalls in einem Gasvorwärmer (2) erhitzt. Vor Eintritt in den Rohrreaktor (4) werden die aus den Gasvorwärmern (2) austretenden turbulenten Einzelstromfäden in einer Düse (5) zu zwei koaxialen, laminaren und rotationssysmmetrischen Stromfäden geformt. Im Rohrreaktor (4) durchmischen sich der mittlere Stromfaden (6), der die Metallkomponente enthält, und der umhüllende Stromfaden (7), der den Wasserstoff enthält, unter definierten Bedingungen. Dabei tritt die Reaktion bei Temperaturen zwischen 500°C und 2000°C z.B. gemäß folgenden Fallbeispielen ein:

$$WCl_6 + 3H_2 \rightarrow W + 6\ HCl$$

oder

$$NiCl_2 + H_2 \rightarrow Ni + 2\ HCl$$

Um die Durchmischung der beiden koaxialen Stromfäden sicherzustellen, kann durch Einbau eines Störkörpers (17) in der ansonsten streng laminaren Strömung eine Karman'sche Wirbelstraße erzeugt werden. Die beiden koaxialen Stromfäden werden am Düsenaustritt durch einen schwachen Inertgasstrom (16) getrennt, um Anwachsungen an der Düse (5) zu verhindern.

Um die energetisch stark bevorzugte heterogene Abscheidung dieser Stoffe an der heißen Reaktorwand zu unterbinden, wird diese durch Ringspalte (8) hindurch mit einem Inertgasstrom (9) ($N_2$, Ar oder He), der über den Coandaeffekt an der Reaktorwand anliegt, gespült. Die im Reaktor durch eine homogene Abscheidung aus der Gasphase entstandenen Metallpulverpartikel verlassen diesen gemeinsam mit den gasförmigen Reaktionsprodukten (z.B. HCl), den Inertgasen und den nicht umgesetzten Reaktanden und gelangen direkt in einen Rückblasfilter (10), in dem sie abgeschieden werden. Der Rückblasfilter (10) wird bei Temperaturen zwischen 300°C und 1000°C betrieben, wodurch die Adsorption der Gase, insbesondere der nichtinerten Gase wie HCl an der sehr großen Oberfläche dieser Pulver auf einem niedrigen Niveau gehalten wird, In einem anschließenden Behälter (11) werden die Reste der adsorbierten Gase auf den Pulvern durch bevorzugt wechselweises Anlegen von Vakuum und Fluten mit verschiedenen Gasen bei 300°C bis 1000°C weiter reduziert. Gute Wirkungen werden erzielt, wenn Gase wie $N_2$, Ar oder Kr eingesetzt werden, Besonders bevorzugt wird $SF_6$ eingesetzt.

Nach diesem Verfahren ist auch die Herstellung metastabiler Stoffsysteme und Partikel mit Kern/Mantel-Strukturen möglich. Dabei werden metastabile Stoffsysteme durch Einstellung sehr hoher Abkühlgeschwindigkeiten im unteren Teil des Reaktors erhalten.

Die Partikel mit Kern/Mantel-Struktur werden erhalten, indem im unteren Teil des Reaktors zusätzliche Reaktionsgase eingebracht werden.

Aus dem Evakuierbehälter (11) gelangen die Pulver in den Abkühlbehälter (12), bevor sie durch die Schleuse (13) in den Sammel- und Versandbehälter (14) gelangen. In dem Abkühlbehälter (12) können durch Einblasen verschiedener Gas/Dampfgemische die Partikeloberflächen in definierter Weise oberflächenmodifiziert werden.

Als Werkstoff für diejenigen Bauteile, die Temperaturen bis 2000°C und mehr ausgesetzt sind, wie Wärmetauscher (2) und (3), Düse (5), Reaktor (4) und Reaktorhüllrohr (15), kann bevorzugt beschichteter Graphit, insbesondere Feinkorngraphit, eingesetzt werden. Eine Beschichtung kann z.B. erforderlich sein, wenn die notwendige chemische Beständigkeit des Graphits gegen die eingesetzten Gase wie Metallchloride, HCl, $H_2$ und $N_2$, bei den gegebenen Temperaturen nicht ausreichend ist oder wenn die Erosion bei höheren Strömungsgeschwindigkeiten (0,5 bis 50 m/sec) ganz erheblich ist oder wenn die Gasdichtigkeit des Graphits dadurch erhöht werden kann oder wenn die Oberflächenrauhigkeit der Reaktorbauteile damit herabgesetzt werden kann.

Als Schichten können z.B. SiC, $B_4C$, TiN, TiC und Ni (nur bis 1200°C) eingesetzt werden. Auch Kombinationen verschiedener Schichten, z.B. mit "arteigener" Deckschicht, sind möglich. Diese Schichten können vorteilhaft mittels CVD, Plasmaspritzen und Elektrolyse (Ni) aufgebracht werden.

Wenn nur niedrige Temperaturen notwendig sind, ist auch der Einsatz metallischer Werkstoffe möglich.

Zur Einstellung der Partikelgrößen der Metallpulver können gleichzeitig drei Vorgehensweisen eingesetzt werden:

- Einstellen eines bestimmten Verhältnisses der Reaktions- und Inertgase.

- Einstellen eines bestimmten Druckes.

- Einstellen eines bestimmten Temperatur-Verweilzeit-Profils längs der Reaktorachse.

Das Temperatur-Verweilzeit-Profil wird wie folgt eingestellt:

- Durch zwei oder mehrere Heizzonen vom Beginn der Gasvorwärmer (2) bis zum Ende des Rohrreaktors (4).

- Durch Variation des Reaktorquerschnitts entlang seiner Längsachse.

- Durch Variation der Gasdurchsätze und damit bei vorgegebenem Reaktorquerschnitt der Strömungsgeschwindigkeiten.

Ein wesentlicher Vorteil der Variierbarkeit des Temperatur-Verweilzeit-Profils ist die Möglichkeit der Entkopplung der Keimbildungszone von der Keimwachstumszone. Damit ist es möglich, für die Herstellung "gröberer" Pulver bei sehr niedriger Temperatur und kleiner Verweilzeit (d.h. kleiner Reaktorquerschnitt für eine bestimmte Länge) die Bildung von nur wenigen Keimen zuzulassen, die dann bei hoher Temperatur und großer Verweilzeit (großer Reaktorquerschnitt) zu "groben" Partikeln aufwachsen können. Ebenso ist es möglich, sehr "feine" Pulver herzustellen: in einem Bereich hoher Temperatur und relativ langer Verweilzeit wird die Bildung sehr vieler Keime erreicht, die im weiteren Reaktor bei niedrigen Temperaturen und kurzer Verweilzeit (kleiner Reaktorquerschnitt) nur noch gering aufwachsen. Die Einstellung sämtlicher Übergänge zwischen den hier qualitativ dargestellten Grenzfällen ist möglich.

Im Abkühlbehälter (12) ist durch Einblasen eines geeigneten Gas-/Dampf-Gemisches eine Passivierung der z.T. sehr luftempfindlichen bis pyrophoren Pulver möglich. Die Partikeloberflächen dieser Metallpulver können sowohl mit einer Oxidschicht definierter Dicke als auch mit geeigneten organischen Verbindungen wie höhere Alkohole, Amine oder gleich Sinterhilfsmitteln wie Paraffine in einem inerten Trägergasstrom belegt werden. Die Beschichtung kann auch im Hinblick auf die Weiterverarbeitungsmöglichkeiten der Pulver durchgeführt werden.

Die erfindungsgemäßen nanoskaligen Pulver eignen sich aufgrund ihrer mechanischen, elektrischen und magnetischen Eigenschaften für die Herstellung von neuartigen Sensoren, Aktoren, Strukturmetalle und Cermets.

## Patentansprüche

1. Feinteilige Pulver der Metalle Fe, Co, Ni, W und/oder Mo mit einer definierten Partikelgröße zwischen 1,0 nm und kleiner 100 nm, dadurch gekennzeichnet, daß weniger als 1 % der Einzelpartikel eine Abweichung von mehr als 40 % und keine Einzelpartikel eine Abweichung von mehr als 60 % von der mittleren Korngröße aufweisen.

2. Metallpulver gemäß Anspruch 1, dadurch gekennzeichnet, daß weniger als 1 % der Einzelpartikel eine Abweichung von mehr als 20 % und keine Einzelpartikel eine Abweichung von mehr als 50 % von der mittleren Korngröße aufweisen.

3. Metallpulver gemäß einem der Ansprüche 1 oder 2, dadurch gekennzeichnet, daß weniger als 1 % der Einzelpartikel eine Abweichung von mehr als 10 % und keine Einzelpartikel eine Abweichung von mehr als 40 % von der mittleren Korngröße aufweisen.

4. Metallpulver gemäß einem oder mehreren der Ansprüche 1 bis 3, dadurch gekennzeichnet, daß die Partikelgröße von 1 bis kleiner 50 nm beträgt.

5. Metallpulver gemäß einem oder mehreren der Ansprüche 1 bis 4, dadurch gekennzeichnet, daß die Partikelgröße von 1 bis kleiner 10 nm beträgt.

6. Metallpulver gemäß einem oder mehreren der Ansprüche 1 bis 5, dadurch gekennzeichnet, daß die Partikelgröße von 1 bis kleiner 5 nm beträgt.

7. Metallpulver gemäß einem oder mehreren der Ansprüche 1 bis 6, dadurch gekennzeichnet, daß sie einen Sauerstoffgehalt von weniger als 5.000 ppm aufweisen.

8. Metallpulver gemäß einem oder mehreren der Ansprüche 1 bis 7, dadurch gekennzeichnet, daß sie einen Sauerstoffgehalt von weniger als 1.000 ppm aufweisen.

9. Metallpulver gemäß einem oder mehreren der Ansprüche 1 bis 8, dadurch gekennzeichnet, daß sie einen Sauerstoffgehalt von weniger als 100 ppm, bevorzugt weniger als 50 ppm, aufweisen.

10. Metallpulver gemäß einem oder mehreren der Ansprüche 1 bis 9, dadurch gekennzeichnet, daß die Summe ihrer Verunreinigungen, mit Ausnahme der oxidischen Verunreinigungen, kleiner als 5.000 ppm beträgt.

11. Metallpulver gemäß einem oder mehreren der Ansprüche 1 bis 10, dadurch gekennzeichnet, daß die Summe ihrer Verunreinigungen, mit Ausnahme der oxidischen Verunreinigungen, kleiner als 1.000 ppm beträgt.

12. Metallpulver gemäß einem oder mehreren der Ansprüche 1 bis 11, dadurch gekennzeichnet, daß die Summe ihrer Verunreinigungen, mit Ausnahme der oxidischen Verunreinigungen, kleiner als 200 ppm beträgt.

13. Metallpulver gemäß einem oder mehreren der Ansprüche 1 bis 12, dadurch gekennzeichnet, daß sie in Mengen von größer 1 kg vorliegen.

## Claims

1. Finely divided powders of the metals Fe, Co, Ni, W and/or Mo having a defined particle size of between 1.0 nm and less than 100 nm, characterised in that less than 1% of the individual particles deviate by more than 40% and no individual particle deviates by more than 60% from the mean grain size.

2. Metal powders according to claim 1, characterised in that less than 1% of the individual particles deviate by more than 20% and no individual particle deviates by more than 50% from the mean grain size.

3. Metal powders according to one of claims 1 or 2, characterised in that less than 1% of the individual particles deviate by more than 10% and no individual particle deviates by more than 40% from the mean grain size.

4. Metal powders according to one or more of claims 1 to 3, characterised in that particle size is from 1 to less than 50 nm.

5. Metal powders according to one or more of claims 1 to 4, characterised in that particle size is from 1 to less than 10 nm.

6. Metal powders according to one or more of claims 1 to 5, characterised in that particle size is from 1 to less than 5 nm.

7. Metal powders according to one or more of claims 1 to 6, characterised in that they have an oxygen content of less than 5000 ppm.

8. Metal powders according to one or more of claims 1 to 7, characterised in that they have an oxygen content of less than 1000 ppm.

9. Metal powders according to one or more of claims 1 to 8, characterised in that they have an oxygen content of less than 100 ppm, preferably of less than 50 ppm.

10. Metal powders according to one or more of claims 1 to 9, characterised in that the sum of the impurities thereof, with the exception of oxide impurities, is less than 5000 ppm.

11. Metal powders according to one or more of claims 1 to 10, characterised in that the sum of the impurities thereof, with the exception of oxide impurities, is less than 1000 ppm.

12. Metal powders according to one or more of claims 1 to 11, characterised in that the sum of the impurities thereof, with the exception of oxide impurities, is less than 200 ppm.

13. Metal powders according to one or more of claims 1 to 12, characterised in that they are available in quantities of greater than 1 kg.

**Revendications**

1. Poudre finement divisée des métaux Fe, Co, Ni, W et/ou Mo, présentant une grosseur particulaire bien définie comprise entre 1,0 nm et inférieure à 100 nm, caractérisée en ce que moins de 1 % des particules individuelles présente un écart supérieur à 40 % et aucune particule individuelle ne présente un écart supérieur à 60% par rapport à la grosseur moyenne des grains.

2. Poudre métallique selon la revendication 1, caractérisée en ce que moins de 1 % des particules individuelles présente un écart supérieur à 20 % et aucune particule individuelle ne présente un écart supérieur à 50 % par rapport à la grosseur moyenne des grains.

3. Poudre métallique selon l'une des revendications 1 ou 2, caractérisée en ce que moins de 1 % des particules individuelles présente un écart supérieur à 10 % et aucune particule individuelle ne présente un écart supérieur à 40 % par rapport à la grosseur moyenne des grains.

4. Poudre métallique selon une ou plusieurs des revendications 1 à 3, caractérisée en ce que la grosseur des particules est de 1 à moins de 50 nm.

5. Poudre métallique selon une ou plusieurs des revendications 1 à 4, caractérisée en ce que la grosseur des particules se situe entre 1 et moins de 10 nm

6. Poudre métallique selon une ou plusieurs des revendications 1 à 5, caractérisée en ce que la grosseur des particules se situe entre 1 et moins de 5 nm.

7. Poudre métallique selon une ou plusieurs des revendications 1 à 6, caractérisée en ce que les particules présentent une teneur en oxygène inférieure à 5 000 ppm (millionièmes).

8. Poudre métallique selon une ou plusieurs des revendications 1 à 7, caractérisée en ce que les particules présentent une teneur en oxygène inférieure à 1 000 ppm.

9. Poudre métallique selon une ou plusieurs des revendications 1 à 8, caractérisée en ce que les particules présentent une teneur en oxygène inférieure à 100 ppm, de préférence inférieure à 50 ppm.

10. Poudre métallique selon une ou plusieurs des revendications 1 à 9, caractérisée en ce que la somme de leurs impuretés, à l'exclusion des impuretés oxydées, est inférieure à 5 000 ppm.

11. Poudre métallique selon une ou plusieurs des revendications 1 à 10, caractérisée en ce que la somme des impuretés, à l'exclusion des impuretés oxydées, est inférieure à 1 000 ppm.

12. Poudre métallique selon une ou plusieurs des revendications 1 à 11, caractérisée en ce que la somme de leurs impuretés, à l'exclusion des impuretés oxydées, est inférieure à 200 ppm.

13. Poudre métallique selon une ou plusieurs des revendications 1 à 12, caractérisée en ce que les poudres sont présentes en des quantités supérieures à 1 kg.

EP 0 568 862 B1

FIG.1